# EUROPEAN PATENT SPECIFICATION

(11) **EP 4 332 533 B1**
(45) Date of publication and mention of the grant of the patent: **07.10.2026**
(21) Application number: 22795612.5
(22) Date of filing: 18.04.2022
(51) Int. Cl.: G01L 19/14, G01L 19/00, G01L 19/06, G01F 15/14

(54) **PHYSICAL QUANTITY MEASUREMENT DEVICE**
VORRICHTUNG ZUR MESSUNG PHYSIKALISCHER MENGEN
DISPOSITIF DE MESURE DE QUANTITÉ PHYSIQUE

(30) Priority: 28.04.2021 JP 2021075984
(43) Date of publication of application: 06.03.2024
(73) Proprietor: NAGANO KEIKI CO., LTD., Tokyo 143-8544 (JP)
(72) Inventor: ARUGA, Daiki, Tokyo 143-8544 (JP); YANAGISAWA, Ryosuke, Tokyo 143-8544 (JP); KUBO, Ryousuke, Tokyo 143-8544 (JP); YOSHIDA, Yuma, Tokyo 143-8544 (JP)
(74) Representative: Page White Farrer
(86) International application number: PCT/JP2022/017983
(87) International publication number: WO 2022/230699

(56) References cited:
- EP-A1- 2 236 998
- JP-A- 2002 107 246
- JP-A- 2007 155 505
- JP-A- 2013 250 148
- JP-A- H0 843 233
- JP-A- H1 123 400
- US-A- 5 317 921
- US-A- 5 587 535
- US-A1- 2011 138 924
- US-B1- 6 439 058
- US-B2- 9 778 127

## Description

### TECHNICAL FIELD

The present invention relates to a physical quantity measuring device.

### BACKGROUND ART

There is known a physical quantity measuring device including a casing body, a sensor module, and an electronic circuit, in which the sensor module is attached from an outside to an open end of the casing body and the electronic circuit is housed in the casing body.

In Patent Literature 1, a sensor module attached with a sensor tuned to cover an expected measurement range is produced, and the sensor module is attached from an outside to an open end of a casing body, in which an electronic circuit is housed in advance. According to the above arrangement, even after the production process of the casing body is finished, the sensor module attached with the sensor tuned to cover the measurement range can be attached from the outside of the open end of the casing body. A common casing body is thus usable for physical quantity measuring devices of different measurement ranges, reducing the production cost.

Patent Literature 2 discloses a resistive strain gauge sensor of the type including a circuit board carrying circuitry, a diaphragm bonded to the circuit board, and strain gauge circuitry on the diaphragm.

### CITATION LIST

### PATENT LITERATURE(S)

Patent Literature 1: JP 2016-121897 A
Patent Literature 2: US 5317921 A

### SUMMARY OF THE INVENTION

### PROBLEM(S) TO BE SOLVED BY THE INVENTION

In Patent Literature 1, connection pins of the sensor module are guided by a guide member provided for the casing body to an internal terminal on a terminal board. Since the position of the guide member is not determined by the terminal board in the above arrangement, when the position of the internal terminal is misaligned with the guide member, the connection pins of the sensor module may not be appropriately guided to the internal terminal on the terminal board.

An object of the invention is to provide a physical quantity measuring device capable of securing an electrical connection.

### MEANS FOR SOLVING THE PROBLEM(S)

A physical quantity measuring device according to an aspect of the invention includes: a sensor module including a detector configured to detect a physical quantity of a measurement target fluid, a first board for the detector to be attached, and a plurality of linearly arranged connection pins provided for the first board; a cover member, provided with a guide groove portion configured to guide a terminal to the connection pins, the guide groove portion provided with two insertion holes for the two connection pins to be inserted, the two connection pins being disposed at ends of the plurality of connection pins, the cover member covering the sensor module; and a second board including the terminal connected with the connection pins, the second board being electrically connected with the first board.

According to the above aspect of the invention, the connection pins provided for the first board of the sensor module are inserted into the insertion hole of the cover member. In other words, the position of the cover member is determined by the connection pins. The cover member, whose position is determined by the connection pins, is provided with the guide groove portion to guide the terminal of the second board to the connection pins. The position of the terminal of the second board is thus determined by the connection pins via the guide groove portion of the cover member. Accordingly, since the connection pins, the guide groove portion, and the terminal are not misaligned, the terminal can be securely guided to the connection pins by the guide groove portion.

It is preferable that the physical quantity measuring device according to the above aspect of the invention further includes: a sealing member interposed between the cover member and the sensor module, in which the cover member is provided with a cutout at a position corresponding to the sealing member.

In the above arrangement, the sealing member is interposed between the cover member and the sensor module. At this time, the position of the sealing member can be checked through the cutout, which is formed in the cover member at the position corresponding to the sealing member. This inhibits misalignment of the sealing member.

It is preferable that the physical quantity measuring device according to the above aspect of the invention further includes a casing that houses the sensor module, the cover member, and the second board, in which the cover member includes a cover member body covering the sensor module and a plurality of claws extending from the cover member body to protrude in a direction orthogonal to the cover member body, and a plurality of engagement grooves are provided in an inner circumferential surface of the casing, the engagement grooves being respectively engaged with the claws.

In the above arrangement, the cover member includes the cover member body covering the sensor module and the plurality of claws extending from the cover member body to protrude in the direction orthogonal to the cover member body. Further, the casing to house the sensor module and the cover member is provided with the plurality of engagement grooves in an inner circumferential surface thereof, the engagement grooves being respectively engaged with the claws. The cover member can thus be fixed by engaging the claws with the engagement grooves formed in the inner circumferential surface of the casing. Accordingly, the cover member can be securely fixed.

In the physical quantity measuring device according to the above aspect of the invention, it is preferable that the cover member body is rectangular in a plan view and the claws include a first claw and a second claw provided opposite the first claw across the cover member body.

In the above arrangement, the first claw and the second claw are provided on opposite sides across the cover member body having a rectangular profile in a plan view. The cover member is thus engaged with and fixed to the casing at both sides of the cover member body. Accordingly, the cover member can be further securely fixed.

### BRIEF DESCRIPTION OF THE DRAWINGS

Fig. 1 is a perspective view of an outline of a physical quantity measuring device according to an exemplary embodiment of the invention.
Fig. 2 is another perspective view of the outline of the physical quantity measuring device viewed in a direction different from the direction in Fig. 1.
Fig. 3 is an exploded perspective view of the outline of the physical quantity measuring device according to the exemplary embodiment.
Fig. 4 is another exploded perspective view of the outline of the physical quantity measuring device viewed in a direction different from the direction in Fig. 3.
Fig. 5 is a cross-sectional view of the outline of the physical quantity measuring device according to the exemplary embodiment.
Fig. 6 is an exploded perspective view of an outline of a sensor module.
Fig. 7 is another exploded perspective view of the outline of the sensor module viewed in a direction different from the direction in Fig. 6.
Fig. 8 is an exploded perspective view of the sensor module and a cover member with a part thereof being sectioned.
Fig. 9 is a cross-sectional perspective view of the sensor module and the cover member with a part thereof being enlarged.
Fig. 10 is a plan view of an outline of a first casing and the cover member.
Fig. 11 is a cross-sectional view of the first casing, the cover member, and the sensor module.
Fig. 12 is a perspective view of the sensor module and the cover member with a part thereof being enlarged.

### DESCRIPTION OF EMBODIMENT(S)

### Exemplary Embodiment

A physical quantity measuring device 1 according to an exemplary embodiment of the invention will be described below with reference to the attached drawings.

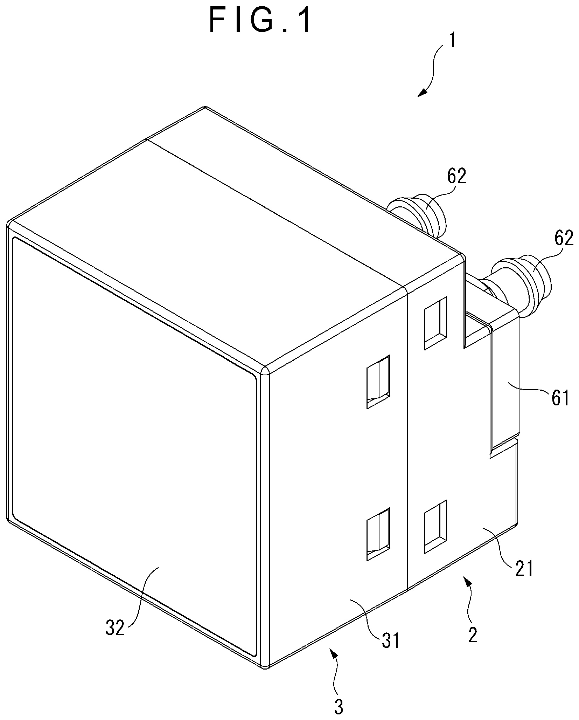

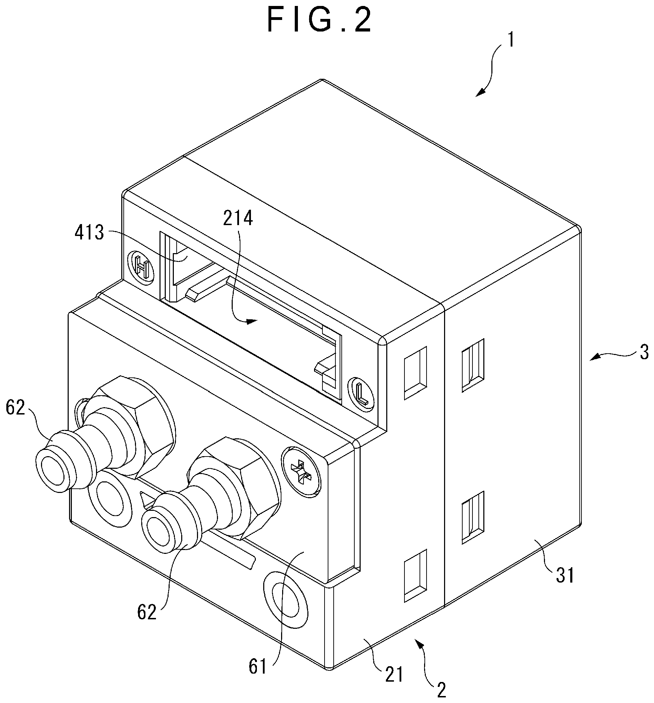

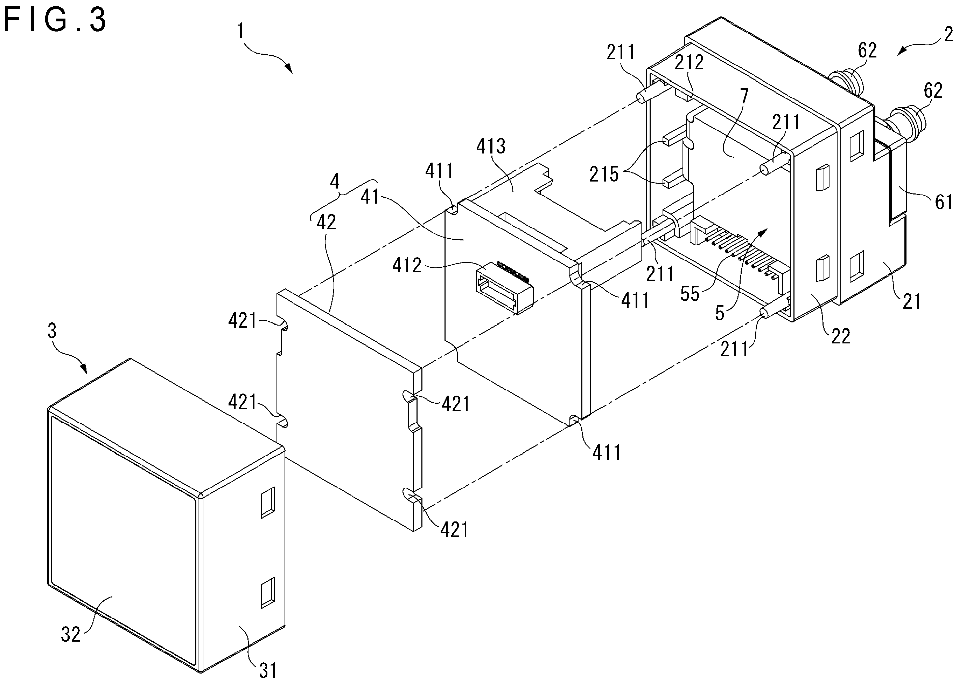

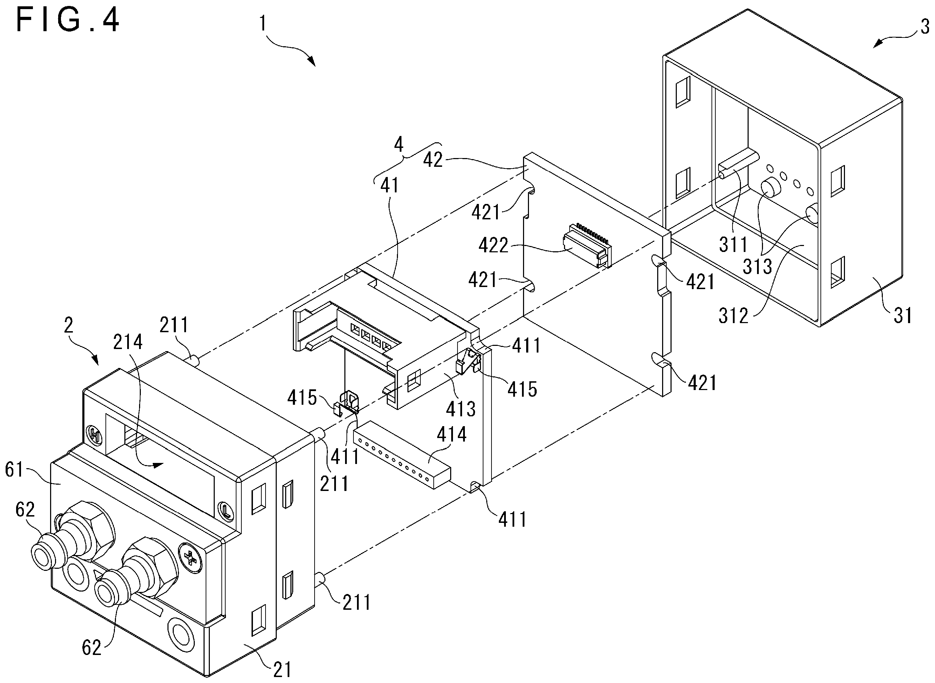

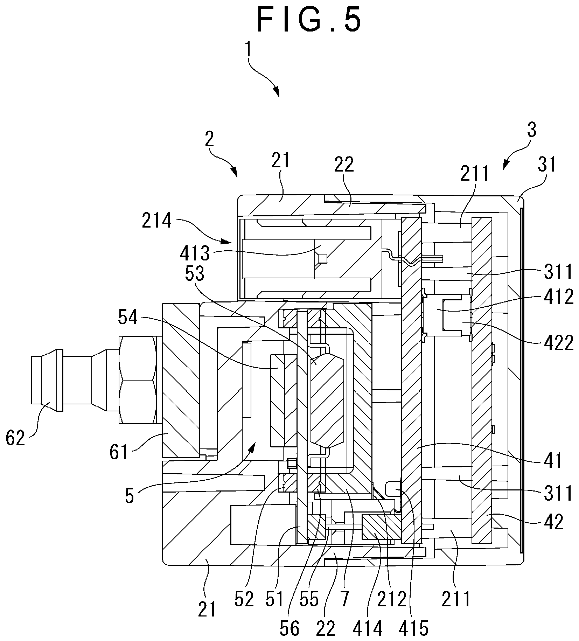

Fig. 1 is a perspective view of an outline of the physical quantity measuring device 1 according to the present exemplary embodiment. Fig. 2 is another perspective view of the outline of the physical quantity measuring device 1 viewed in a direction different from the direction in Fig. 1. Fig. 3 is an exploded perspective view of the outline of the physical quantity measuring device 1. Fig. 4 is another exploded perspective view of the physical quantity measuring device 1 viewed in a direction different from the direction in Fig. 3. Fig. 5 is a cross-sectional view of the outline of the physical quantity measuring device 1. It should be noted that the physical quantity measuring device 1 of the present exemplary embodiment is a differential pressure sensor, more specifically, a small-sized digital micro-differential pressure sensor.

As illustrated in Figs. 1 to 5, the physical quantity measuring device 1 includes a first casing 2, a second casing 3, a circuit board 4, a sensor module 5, a base member 61, ports 62, and a cover member 7.

### First Casing 2

The first casing 2 is a hollow rectangular component configured to house the sensor module 5 and the like. The first casing 2 is an exemplary casing of the invention.

In the present exemplary embodiment, the first casing 2 includes a first casing body 21 and a fitting portion 22.

The first casing body 21 is configured to house the sensor module 5 and the like therein. In the present exemplary embodiment, the first casing body 21 is provided with first supports 211 and contact portions 212.

The first supports 211 are columnar components provided at four respective corners of the first casing body 21 in a manner protruding toward the second casing 3. Specifically, four first supports 211 are provided integrally with the first casing body 21 in the present exemplary embodiment.

The contact portions 212 are respectively provided inside the first supports 211 at diagonal positions of the first casing body 21. In the present exemplary embodiment, the contact portions 212 are provided at two positions on the first casing body 21. Each of the contact portions 212 is in contact with one of later-described elastic support members 415.

In the present exemplary embodiment, an opening 214 is provided in the first casing body 21 at a position corresponding to an external terminal 413 provided on a later-described relay board 41. The external terminal 413 is thus configured to be exposed to an outside of the first casing 2.

Further, in the present exemplary embodiment, a support structure 215 that contacts and supports the later-described relay board 41 is provided on an inner side of the first casing body 21.

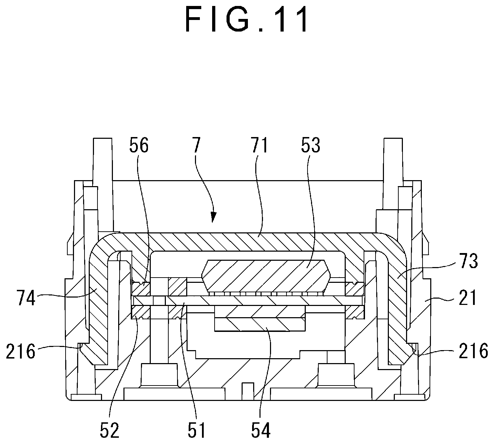

Furthermore, in the present exemplary embodiment, engagement grooves 216 are formed in an inner circumferential surface of the first casing body 21 (see, Fig. 11).

The fitting portion 22 is a thinned portion at an end of the first casing body 21. The fitting portion 22 is configured to be inserted into a later-described second casing body 31 of the second casing 3 and be fitted to an inner circumference of the second casing body 31.

### Second Casing 3

As in the above-described first casing 2, the second casing 3 is a hollow rectangular component to house a later-described display board 42 of the circuit board 4 and the like.

In the present exemplary embodiment, the second casing 3, which includes the second casing body 31 and a panel sheet 32, is fitted to the above-described first casing 2. In other words, the second casing 3 is attached to the first casing 2 in the present exemplary embodiment.

The second casing body 31 is configured to house the display board 42 and the like therein. In the present exemplary embodiment, the second casing body 31 is provided with second supports 311, an interior wall portion 312, and protrusions 313. Further, the second casing body 31 is configured such that an exterior surface thereof is flush with an exterior surface of the first casing body 21 when being attached to the first casing 2. The panel sheet 32 is attached to an outer bottom surface (i.e. a front surface) of the second casing body 31. Although not illustrated in the drawings, the panel sheet 32 may include an indication of a model number, specification, and the like of the physical quantity measuring device 1.

The second supports 311 are columnar components provided near four corners of the second casing body 31 in a manner protruding toward the first casing 2. Specifically, four second supports 311 are provided integrally with the second casing body 31 in the present exemplary embodiment. In the present exemplary embodiment, the second supports 311 are configured to be located inward with respect to the above-described first supports 211 of the first casing 2.

The interior wall portion 312, which is a thickened part on the inner surface of the second casing body 31, faces the fitting portion 22 of the first casing 2 when the second casing 3 is fitted to the first casing 2.

The protrusions 313, which are columnar components protruding from a bottom of the second casing body 31, are configured to be in contact with the later-described display board 42.

### Circuit Board 4

The circuit board 4 includes the relay board 41 and the display board 42 facing each other.

As described above, the relay board 41 is housed in the first casing body 21. In the present exemplary embodiment, first cutouts 411 are provided in the relay board 41 at positions corresponding to the above-described first supports 211 (i.e., at four corners) of the first casing body 21. In other words, the first cutouts 411 are provided at four positions in the relay board 41. Each of the first supports 211 is thus inserted through the corresponding one of the first cutouts 411 when the relay board 41 is housed in the first casing body 21. The position of the relay board 41 is thus determined by the first supports 211 of the first casing 2.

In the present exemplary embodiment, the relay board 41 is held between the second supports 311 inserted through later-described second cutouts 421 of the display board 42 and the support structure 215 of the first casing 2. As described above, the relay board 41 in the present exemplary embodiment, which is held between the first casing 2 and the second casing 3, is positioned and supported by the first casing 2. Accordingly, the relay board 41 can be securely supported.

In the present exemplary embodiment, the relay board 41 is provided with a connector receiver 412, the external terminal 413, an internal terminal 414, and elastic support members 415.

The connector receiver 412 is disposed on a surface of the relay board 41 facing the display board 42. The connector receiver 412 is connectable with a later-described connector 422 of the display board 42. The relay board 41 and the display board 42 are electrically connected by connecting the connector receiver 412 and the connector 422.

As described above, the external terminal 413 is disposed at a position corresponding to the opening 214 of the first casing body 21 to be exposed to an outside of the first casing body 21 through the opening 214. The external terminal 413 is thus connectable with wiring for external output, wiring for a power source, and the like. In other words, the external terminal 413 is provided with an external output terminal and a power source terminal.

The internal terminal 414, which is disposed at a position corresponding to later-described connection pins 55 of the sensor module 5, is connectable with the connection pins 55. The relay board 41 and the sensor module 5 are electrically connected by connecting the connection pins 55 and the internal terminal 414. In other words, the relay board 41 and the display board 42 are electrically connected with the sensor module 5 in the present exemplary embodiment. The internal terminal 414 is an exemplary terminal of the invention.

The elastic support member 415 is a metallic spring member having a Z-shaped cross section. In the present exemplary embodiment, the elastic support members 415 are interposed, at diagonal positions of the first casing body 21, between the contact portions 212 of the first casing body 21 and the later-described relay board 41 of the circuit board 4.

As described above, the display board 42 is housed in the second casing body 31. In the present exemplary embodiment, the second cutouts 421 are provided in the display board 42 at positions corresponding to the above-described second supports 311 (i.e. near four corners) of the second casing body 31. In other words, the second cutouts 421 are provided at four positions in the display board 42. Each of the second supports 311 is thus inserted through the corresponding one of the second cutouts 421 when the display board 42 is housed in the second casing body 31. The position of the display board 42 is thus determined by the second supports 311 of the second casing 3.

In the present exemplary embodiment, the display board 42 is held between the first supports 211 inserted through the first cutouts 411 of the relay board 41 and the protrusions 313 of the second casing 3. As described above, the display board 42 in the present exemplary embodiment, which is held between the first casing 2 and the second casing 3, is positioned and supported by the second casing 3. Accordingly, the display board 42 can be securely supported.

Further, in the present exemplary embodiment, the display board 42 is provided with the connector 422.

As described above, the connector 422, which is disposed at a position corresponding to the connector receiver 412 of the relay board 41, is connectable with the connector receiver 412.

### Sensor Module 5

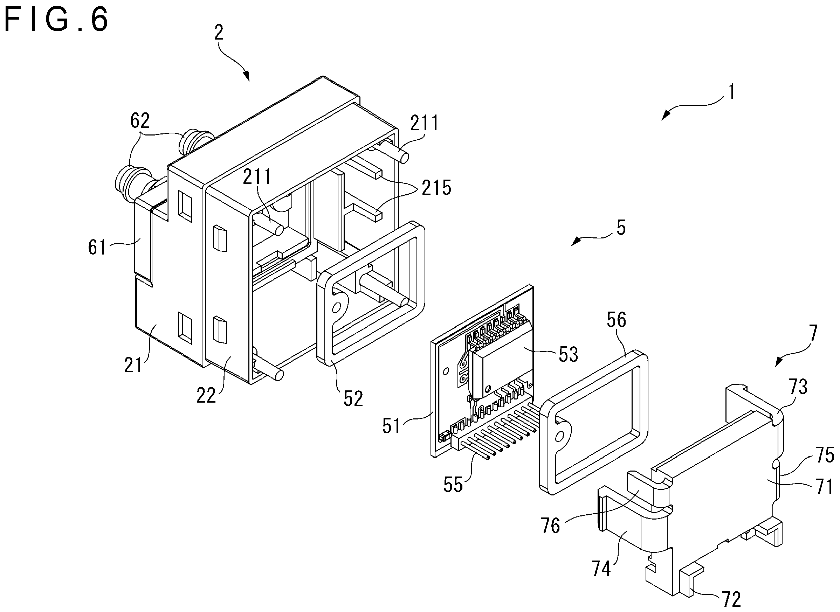

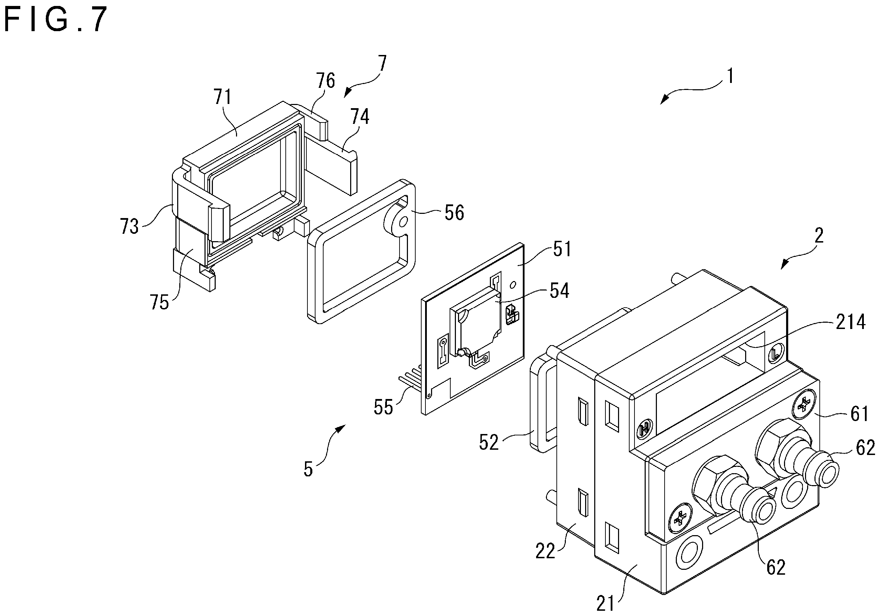

Fig. 6 is an exploded perspective view of an outline of the sensor module 5. Fig. 7 is another exploded perspective view of the outline of the sensor module 5 viewed in a direction different from the direction in Fig. 6.

As illustrated in Figs. 6 and 7, the sensor module 5 includes a sensor printed circuit board (PCB) 51, a first gasket 52, an electronic component 53, a detector 54, the connection pins 55, and a second gasket 56.

The sensor PCB 51 is a board for components such as the electronic component 53 and the detector 54 to be attached. In the present exemplary embodiment, the sensor PCB 51 is disposed to face the above-described relay board 41. The surface of the sensor PCB 51 facing the relay board 41 is covered with the cover member 7. The sensor PCB 51 is an exemplary first board of the invention.

The first gasket 52, which is an annular rectangle component made of rubber or a resin member, is interposed between the first casing body 21 and the sensor PCB 51. The first gasket 52 is disposed to surround the detector 54. The space for the detector 54 of the sensor module 5 to be provided is thus sealed.

The electronic component 53, which is disposed on a surface of the sensor PCB 51 facing the relay board 41, is covered with the cover member 7. In the present exemplary embodiment, the electronic component 53 includes a signal converter to convert/tune signals outputted from the detector 54 and the like.

The detector 54 is configured to detect a pressure of a measurement target fluid introduced through ports 62 and output the signals according to the pressure to the electronic component 53.

As described above, the connection pins 55, which are disposed at a position corresponding to the internal terminal 414 of the relay board 41, are connectable with the internal terminal 414.

The second gasket 56, which is an annular rectangle component made of rubber or a resin member, is interposed between the cover member 7 and the sensor PCB 51. The second gasket 56 is disposed to surround the electronic component 53. The space for the electronic component 53 of the sensor module 5 to be provided is thus sealed.

### Base Member 61 and Ports 62

Referring back to Figs. 2 to 5, the base member 61 is a plate-shaped component attached to a rear side of the first casing body 21. In the present exemplary embodiment, the base member 61 has two holes (not illustrated in the drawings) to which two ports 62 are attached. A filter (not illustrated in the drawings) is inserted at a rear side of the base member 61 (i.e. a side near the first casing body 21).

The ports 62 are cylindrical components through which the measurement target fluid is introduced. The measurement target fluid is thus introduced into a space inside the first casing body 21, in which the detector 54 is disposed, through the ports 62 and the filter. As described above, two ports 62 are attached to the base member 61 in the present exemplary embodiment. Thus, the physical quantity measuring device 1 of the present exemplary embodiment is a differential-pressure sensor configured to detect a differential pressure of the measurement target fluid introduced into the two ports 62.

The invention is not limited to the above configuration. For instance, no filter may be provided at the rear side of the base member 61.

### Cover Member 7

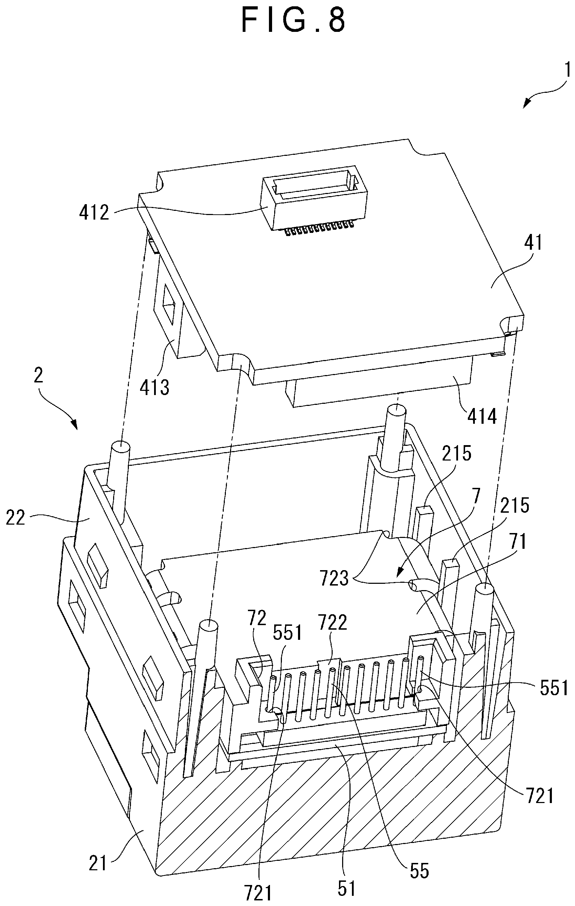

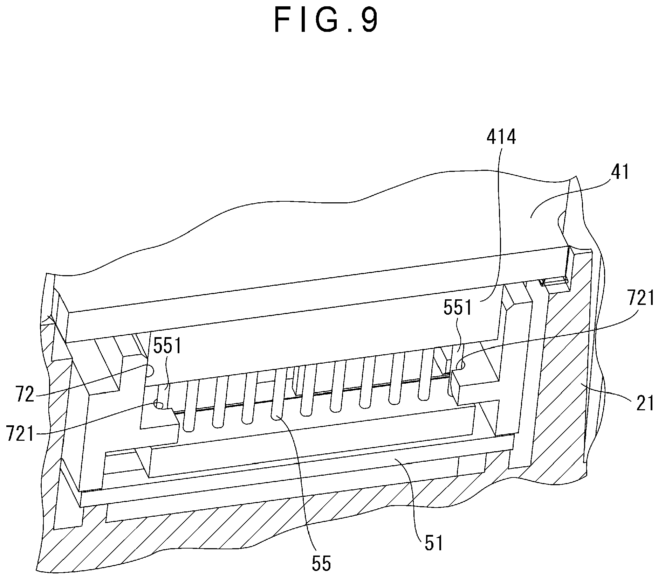

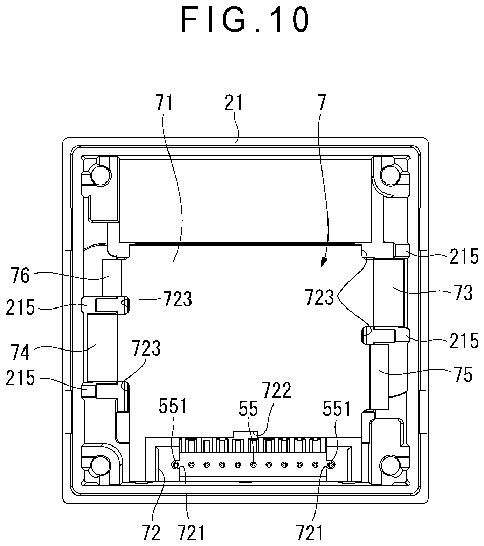

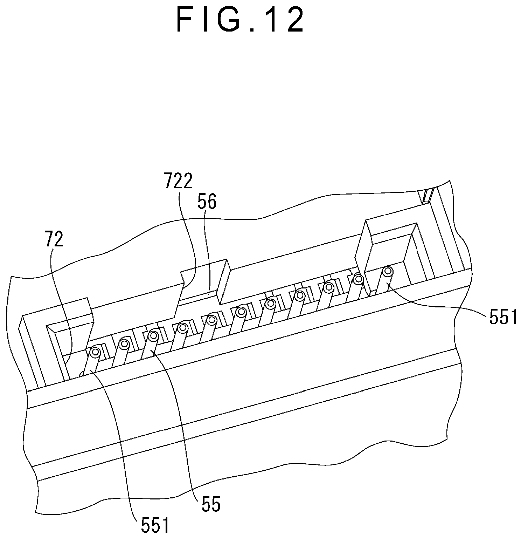

Fig. 8 is an exploded perspective view of the sensor module 5 and a cover member 7 with a part thereof being sectioned. Fig. 9 is a perspective view of the sensor module 5 and the cover member 7 with a part thereof being enlarged. Fig. 10 is a plan view of an outline of the first casing 2 and the cover member 7. Fig. 11 is a cross-sectional view of the first casing 2, the cover member 7, and the sensor module 5. Fig. 12 is a perspective view of the sensor module 5 and the cover member 7 with a part thereof being enlarged.

As illustrated in Figs. 6 to 12, the cover member 7, which is a component covering the sensor module 5, is made of a resin member or metal. Specifically, the cover member 7 covers a surface of the sensor PCB 51 provided with the electronic component 53.

In the present exemplary embodiment, the cover member 7 includes a cover member body 71, a guide groove portion 72, a first claw 73, a second claw 74, a first contact portion 75, and a second contact portion 76.

The cover member body 71 covers the surface of the sensor PCB 51 provided with the electronic component 53. In the present exemplary embodiment, the cover member body 71 is rectangular in a plan view.

The guide groove portion 72 is formed at a position corresponding to the connection pins 55. The guide groove portion 72 is configured to serve as a guide groove for guiding the internal terminal 414 to the connection pins 55. In the present exemplary embodiment, the guide groove portion 72 includes two insertion holes 721 into which two terminal connection pins 551, which are disposed at ends of the linearly arranged connection pins 55, are inserted. The terminal connection pins 551 are inserted into the respective insertion holes 721 to enable the sensor module 5 to determine the position of the cover member 7.

Further, the guide groove portion 72 of the present exemplary embodiment is provided with a cutout 722 at a position corresponding to the above-described second gasket 56. The position of the second gasket 56 can thus be seen through the cutout 722 (see, Fig. 12). This inhibits misalignment of the second gasket 56 that may otherwise be caused when the second gasket 56 is provided between the sensor PCB 51 and the cover member 7. The second gasket 56 is an exemplary sealing member of the invention.

The first claw 73 extends from the cover member body 71 to protrude in a direction orthogonal to the cover member body 71. An end of the first claw 73 is bent to be L-shaped in a cross-sectional view.

As with the above-described first claw 73, the second claw 74 extends from the cover member body 71 to protrude in the direction orthogonal to the cover member body 71. More specifically, the second claw 74 is provided opposite the first claw 73 across the cover member body 71. An end of the second claw 74 is bent to be L-shaped in a cross-sectional view.

The cover member body 71 includes grooves 723 provided on both sides of each of the first claw 73 and the second claw 74.

As with the above-described first claw 73, the first contact portion 75 extends from the cover member body 71 to protrude in the direction orthogonal to the cover member body 71. In the present exemplary embodiment, the first contact portion 75, which is disposed near the first claw 73, is capable of being in contact with an inner circumferential surface of the first casing 2.

As with the above-described first claw 73, the second contact portion 76 extends from the cover member body 71 to protrude in the direction orthogonal to the cover member body 71. In the present exemplary embodiment, the second contact portion 76, which is disposed near the second claw 74, is capable of being in contact with the inner circumferential surface of the first casing 2.

### Connection between Connection Pins 55 and Internal Terminal 414

Next, how the connection pins 55 and the internal terminal 414 are connected will be described below.

As illustrated in Fig. 8, since the terminal connection pins 551 are inserted into the insertion holes 721 of the guide groove portion 72 when the cover member 7 is installed to cover the sensor module 5 as described above, the position of the cover member 7 is determined by the connection pins 55 of the sensor module 5.

In this state, the internal terminal 414 of the relay board 41 is guided by the guide groove portion 72 of the cover member 7 to be disposed at the position corresponding to the connection pins 55, as illustrated in Fig. 9. The internal terminal 414 is thus securely guided to a position capable of being connected with the connection pins 55. As described above, since the position of the guide groove portion 72 of the cover member 7 is determined by the connection pins 55 and the position of the internal terminal 414 of the relay board 41 is determined by the guide groove portion 72 in the present exemplary embodiment, the connection pins 55, the guide groove portion 72, and the internal terminal 414 are not misaligned. Accordingly, the internal terminal 414 can be securely guided to the connection pins 55 by the guide groove portion 72.

### Fixing Structure of Cover Member 7

Next, the structure for fixing the cover member 7 will be described.

As illustrated in Figs. 10 and 11, when the cover member 7 is installed to cover the sensor module 5, the first claw 73 and the second claw 74 are engaged with the engagement grooves 216 formed in the inner circumferential surface of the first casing body 21. The cover member 7 is thus fixed to the first casing 2. At this time, since the first claw 73 and the second claw 74 are provided on opposite sides across the cover member body 71 having a rectangular profile in a plan view, the cover member 7 is engaged with and fixed to the first casing 2 at both sides of the cover member body 71. Accordingly, the cover member 7 can be further securely fixed.

Further, when the cover member 7 is attached to the first casing body 21 in the present exemplary embodiment, the first claw 73 and the second claw 74 are guided by the support structure 215 and the grooves 723 to be led to the engagement grooves 216. This facilitates the attachment of the cover member 7.

Furthermore, when the cover member 7 is fixed to the first casing 2 in the present exemplary embodiment, the first contact portion 75 and the second contact portion 76 are brought into contact with an outside of a wall surface of the first casing body 21 for housing the sensor module 5. In other words, the position of the cover member 7 is determined by the first claw 73, the second claw 74, the first contact portion 75, and the second contact portion 76 in the present exemplary embodiment. Accordingly, the position of the cover member 7 can be kept from being displaced by, for instance, receiving an impact or the like.

### Advantage(s) of Exemplary Embodiment

The following advantages can be achieved by the present exemplary embodiment described above.
(1) In the present exemplary embodiment, the terminal connection pins 551 provided for the sensor PCB 51 of the sensor module 5 are inserted into the insertion holes 721 of the cover member 7. In other words, the position of the cover member 7 is determined by the connection pins 55. The cover member 7, whose position is determined by the connection pins 55, is provided with the guide groove portion 72 to guide the internal terminal 414 of the relay board 41 to the connection pins 55. The position of the internal terminal 414 of the relay board 41 is thus determined by the connection pins 55 via the guide groove portion 72 of the cover member 7. Accordingly, since the connection pins 55, the guide groove portion 72, and the internal terminal 414 are not misaligned, the internal terminal 414 can be securely guided to the connection pins 55 by the guide groove portion 72.
(2) In the present exemplary embodiment, the second gasket 56 is interposed between the cover member 7 and the sensor module 5. At this time, the position of the second gasket 56 can be checked through the cutout 722, which is formed in the cover member 7 at the position corresponding to the second gasket 56. This inhibits misalignment of the second gasket 56.
(3) In the present exemplary embodiment, the cover member 7 includes the cover member body 71 covering the sensor module 5 and the first claw 73 and the second claw 74 extending from the cover member body 71 to protrude in the direction orthogonal to the cover member body 71. Further, the first casing 2 to house the sensor module 5 and the cover member 7 is provided with the engagement grooves 216 in an inner circumferential surface thereof, the engagement grooves 216 being respectively engaged with the first claw 73 and the second claw 74. The cover member 7 can thus be fixed by engaging the first claw 73 and the second claw 74 with the engagement grooves 216 formed in the inner circumferential surface of the first casing 2. Accordingly, the cover member 7 can be securely fixed.
(4) In the present exemplary embodiment, the first claw 73 and the second claw 74 are provided on opposite sides across the cover member body 71 having a rectangular profile in a plan view. The cover member 7 is thus engaged with and fixed to the first casing 2 at both sides of the cover member body 71. Accordingly, the cover member 7 can be further securely fixed.
(5) In the present exemplary embodiment, the cover member 7 includes the first contact portion 75 and the second contact portion 76 extending from the cover member body 71 to protrude in the direction orthogonal to the cover member body 71. The position of the cover member 7 is thus determined by the first claw 73, the second claw 74, the first contact portion 75, and the second contact portion 76. Accordingly, the position of the cover member 7 can be kept from being displaced by, for instance, receiving an impact or the like.

### Modifications

It should be noted that the invention is not limited to the above-described exemplary embodiments but includes modifications, improvements, and the like as long as an object of the invention can be achieved.

In the above exemplary embodiment, the elastic support members 415 brought into contact with the contact portions 212 of the first casing 2 are spring components having a Z-shaped cross section. The invention, however, is not limited thereto. The elastic support members are in any desired form (e.g. a coil spring component) as long as being capable of biasing the first board toward the second casing. Further, the scope of the invention encompasses an arrangement without any elastic support member.

In the above exemplary embodiment, the relay board 41 is housed in the first casing 2. The invention, however, is not limited thereto. For instance, the relay board is optionally housed in the second casing.

Similarly, the display board 42 is housed in the second casing 3 in the above exemplary embodiment. The invention, however, is not limited thereto. For instance, the display board is optionally housed in the first casing.

In the above exemplary embodiment, the first supports 211 and the second supports 311 are columnar components. The invention, however, is not limited thereto. For instance, the first and second supports are optionally in a form of rectangular columns or hollow pipe-shaped components.

In the above exemplary embodiment, four first supports 211 and four second supports 311 are provided. The invention, however, is not limited thereto. For instance, the number of the first supports and the second supports may each be five or more or three or less. It is only necessary that a plurality of first supports and a plurality of second supports are provided.

In the above exemplary embodiment, the physical quantity measuring device 1 is a differential-pressure sensor configured to detect a differential pressure of the measurement target fluid introduced into the two ports 62. The invention, however, is not limited thereto. For instance, the physical quantity measuring device is optionally a pressure sensor provided with a single port and configured to detect a pressure of the measurement target fluid introduced into the port or a temperature sensor configured to detect a temperature of the measurement target fluid. It is only necessary for the physical quantity measuring device to be configured to detect a physical quantity of the measurement target fluid.

In the above exemplary embodiment, the relay board 41 is provided with the first cutouts 411 at four corners. The invention, however, is not limited thereto. For instance, a plurality of first cutouts are optionally provided near a central part of the first board so that the first supports of the first casing may be inserted through the first cutouts. The position and the number of the first cutouts in the first board are designed as desired.

Similarly, the display board 42 is provided with the second cutouts 421 near four corners in the above exemplary embodiment. The invention, however, is not limited thereto. For instance, a plurality of second cutouts are optionally provided near a central part of the second board so that the second supports of the second casing may be inserted through the second cutouts. The position and the number of the second cutouts in the second board are designed as desired.

In the above exemplary embodiment, the cutout 722 is provided in the guide groove portion 72. The invention, however, is not limited thereto. For instance, the cutout is optionally provided in the cover member body as long as being provided at a position corresponding to the second gasket. Further, the scope of the invention encompasses an arrangement without any cutout in the cover member.

In the above exemplary embodiment, the cover member 7 is fixed to the first casing 2 by engaging the first claw 73 and the second claw 74 with the engagement grooves 216 of the first casing body 21. The invention, however, is not limited thereto. For instance, the cover member is optionally fixed on the first casing by a fastener such as a bolt.

### EXPLANATION OF CODES

1...physical quantity measuring device, 2...first casing, 3...second casing, 4...circuit board, 5...sensor module, 7...cover member, 21...first casing body, 22...fitting portion, 31...second casing body, 32...panel sheet, 41...relay board (second board), 42...display board, 51...sensor PCB (first board), 52...first gasket, 53...electronic component, 54...detector, 55...connection pin, 56...second gasket (sealing member), 61...base member, 62...port, 71...cover member body, 72...guide groove portion, 73...first claw, 74...second claw, 75...first contact portion, 76...second contact portion, 211...first support, 212...contact portion, 214...opening, 215...support structure, 216...engagement groove, 311...second support, 312...interior wall portion, 313... protrusion, 411...first cutout, 412...connector receiver, 413...external terminal, 414...internal terminal (terminal), 415...elastic support member, 421...second cutout, 422...connector, 551...terminal connection pin, 721...insertion hole, 722...cutout, 723...groove

## Claims

1. A physical quantity measuring device (1) comprising:
a sensor module (5) comprising a detector (54) configured to detect a physical quantity of a measurement target fluid, a first board (51) for the detector (54) to be attached, and a plurality of linearly arranged connection pins (55) provided for the first board (51);
a cover member (7) provided with a guide groove portion (72) configured to guide a terminal (414) to the connection pins (55), the guide groove portion (72) provided with two insertion holes (721) for two of the plurality of connection pins (551) to be inserted, the two connection pins (551) being disposed at ends of the plurality of connection pins (55), the cover member (7) covering the sensor module (5); and
a second board (41) comprising the terminal (414) connected with the connection pins (55), the second board (41) being electrically connected with the first board (51).

2. The physical quantity measuring device according to claim 1, further comprising a sealing member (56) interposed between the cover member (7) and the sensor module (5), wherein
the cover member (7) is provided with a cutout at a position corresponding to the sealing member (56).

3. The physical quantity measuring device according to claim 1 or 2, further comprising a casing that houses the sensor module (5), the cover member (7), and the second board (41), wherein
the cover member (7) comprises a cover member body (71) covering the sensor module (5) and a plurality of claws extending from the cover member body (71) to protrude in a direction orthogonal to the cover member body (71), and
a plurality of engagement grooves (216) are provided in an inner circumferential surface of the casing, the engagement grooves (216) being respectively engaged with the claws.

4. The physical quantity measuring device according to claim 3, wherein
the cover member body (71) is rectangular in a plan view, and
the claws comprise a first claw (73) and a second claw (74) provided opposite the first claw (73) across the cover member body (71).

## Patentansprüche

1. Vorrichtung zum Messen einer physikalischen Größe (1), umfassend:
ein Sensormodul (5) mit einem Detektor (54), der zum Erfassen einer physikalischen Größe einer zu messenden Zielflüssigkeit konfiguriert ist, einer ersten Platine (51), an der der Detektor (54) befestigt werden soll, und einer Vielzahl von linear angeordneten Anschlussstiften (55), die für die erste Platine (51) vorgesehen sind;
ein Abdeckelement (7), das mit einem Führungsnutabschnitt (72) versehen ist, der konfiguriert ist, um einen Anschluss (414) zu den Anschlussstiften (55) zu führen, wobei der Führungsnutabschnitt (72) mit zwei Einstecköffnungen (721) versehen ist, in die zwei der Vielzahl von Anschlussstiften (551) eingeführt werden sollen, wobei die beiden Anschlussstifte (551) an den Enden der Vielzahl von Anschlussstiften (55) angeordnet sind und das Abdeckelement (7) das Sensormodul (5) abdeckt; und
eine zweite Platine (41), umfassend den Anschluss (414), der mit den Anschlussstiften (55) verbunden ist, wobei die zweite Platine (41) elektrisch mit der ersten Platine (51) verbunden ist.

2. Vorrichtung zum Messen einer physikalischen Größe nach Anspruch 1, ferner umfassend ein Dichtungselement (56), das zwischen dem Abdeckelement (7) und dem Sensormodul (5) angeordnet ist, wobei
das Abdeckelement (7) an einer dem Dichtungselement (56) entsprechenden Stelle mit einer Aussparung versehen ist.

3. Vorrichtung zum Messen einer physikalischen Größe nach Anspruch 1 oder 2, ferner umfassend ein Gehäuse, in dem das Sensormodul (5), das Abdeckelement (7) und die zweite Platine (41) untergebracht sind, wobei
das Abdeckelement (7) einen das Sensormodul (5) abdeckenden Abdeckelementkörper (71) und eine Vielzahl von Klauen umfasst, die sich vom Abdeckelementkörper (71) erstrecken und in einer Richtung senkrecht zum Abdeckelementkörper (71) hervorstehen, und
eine Vielzahl von Eingriffsnuten (216) an einer inneren Umfangsfläche des Gehäuses vorgesehen sind, wobei die Eingriffsnuten (216) jeweils mit den Klauen in Eingriff stehen.

4. Vorrichtung zum Messen einer physikalischen Größe nach Anspruch 3, wobei
der Abdeckelementkörper (71) in der Draufsicht rechteckig ist, und
die Klauen eine erste Klaue (73) und eine zweite Klaue (74) umfassen, die der ersten Klaue (73) gegenüberliegend über den Abdeckelementkörper (71) hinweg vorgesehen ist.

## Revendications

1. Dispositif de mesure de grandeur physique (1) comprenant :
un module capteur (5) comprenant un détecteur (54) configuré pour détecter une grandeur physique d'un fluide cible de mesure, une première carte (51) pour permettre au détecteur (54) d'être fixé, et une pluralité de broches de connexion (55) agencées linéairement fournies pour la première carte (51) ;
un élément de couvercle (7) pourvu d'une partie de rainure de guidage (72) conçue pour guider une borne (414) vers les broches de connexion (55), la partie de rainure de guidage (72) pourvue de deux trous d'insertion (721) permettant à deux parmi la pluralité de broches de connexion (551) d'être insérées, les deux broches de connexion (551) étant disposées aux extrémités de la pluralité de broches de connexion (55), l'élément de couvercle (7) recouvrant le module capteur (5) ; et
une seconde carte (41) comprenant la borne (414) connectée aux broches de connexion (55), la seconde carte (41) étant connectée électriquement à la première carte (51).

2. Dispositif de mesure de grandeur physique selon la revendication 1, comprenant en outre un élément d'étanchéité (56) interposé entre l'élément de couvercle (7) et le module capteur (5), dans lequel
l'élément de couvercle (7) est pourvu d'une découpe à une position correspondant à l'élément d'étanchéité (56).

3. Dispositif de mesure de grandeur physique selon la revendication 1 ou 2, comprenant en outre un boîtier qui loge le module capteur (5), l'élément de couvercle (7) et la seconde carte (41), dans lequel
l'élément de couvercle (7) comprend un corps d'élément de couvercle (71) recouvrant le module capteur (5) et une pluralité de griffes s'étendant à partir du corps d'élément de couvercle (71) pour faire saillie dans une direction orthogonale au corps d'élément de couvercle (71), et
une pluralité de rainures de mise en prise (216) sont fournies dans une surface circonférentielle interne du boîtier, les rainures de mise en prise (216) étant respectivement en prise avec les griffes.

4. Dispositif de mesure de grandeur physique selon la revendication 3, dans lequel
le corps d'élément de couvercle (71) est de forme rectangulaire en vue de dessus, et
les griffes comprennent une première griffe (73) et une seconde griffe (74) fournie à l'opposé de la première griffe (73) de part et d'autre du corps d'élément de couvercle (71).
